# EUROPEAN PATENT SPECIFICATION

(11) **EP 4 216 124 B1**
(45) Date of publication and mention of the grant of the patent: **01.05.2024**
(21) Application number: 23150558.7
(22) Date of filing: 06.01.2023
(51) Int. Cl.: G06Q 10/08, G07C 9/00, G06Q 10/083, G06Q 10/0832, G06Q 10/0833

(54) **DELIVERY RECEIVING DEVICE FOR VEHICLE, DELIVERY RECEIVING SYSTEM, AND INCORRECT DELIVERY DETERMINATION METHOD**
AUSGABEEMPFANGSVORRICHTUNG FÜR EIN FAHRZEUG, AUSGABEEMPFANGSSYSTEM UND VERFAHREN ZUR BESTIMMUNG FALSCHER AUSGABEN
DISPOSITIF DE RÉCEPTION DE LIVRAISON POUR VÉHICULE, SYSTÈME DE RÉCEPTION DE LIVRAISON ET PROCÉDÉ DE DÉTERMINATION DE LIVRAISON INCORRECTE

(30) Priority: 20.01.2022 JP 2022007092
(43) Date of publication of application: 26.07.2023
(73) Proprietor: Suzuki Motor Corporation, Hamamatsu-shi, Shizuoka 432-8611 (JP)
(72) Inventor: NISHIGAI, Kazuya, Hamamatsu-shi, 432-8611 (JP); HIRAGA, Shoki, Hamamatsu-shi, 432-8611 (JP); SUGIURA, Fumiyoshi, Hamamatsu-shi, 432-8611 (JP)
(74) Representative: Plasseraud IP

(56) References cited:
- US-A1- 2016 189 098
- US-A1- 2018 240 067
- US-A1- 2019 156 279

## Description

### [Technical Field]

This invention relates to a delivery receiving device for a vehicle and a delivery receiving system.

### [Background of the Invention]

JP 2006-206225 A discloses a delivery receiving system that allows delivery items to be stored in a storage unit of a parcel vehicle even when a recipient is absent.

### [Prior Art]

### [Patent Literature]

[Patent Literature 1] JP 2006-206225 A

### [Summary of the Invention]

### [Problem to be solved by the Invention]

However, when there are a plurality of vehicles at the receiving location such as an apartment complex and there is a vehicle with a trunk as a storage unit that is not locked, there is a risk that the delivery items are erroneously stored in a vehicle other than the vehicle of the recipient.

Accordingly, this invention is to provide a delivery receiving device for a vehicle and a delivery receiving system capable of preventing incorrect delivery even when there are a plurality of vehicles at a receiving location of a delivery item.

### [Means to solve the problem]

In order to solve the above problems, according to aspects of this invention, there is provided a delivery receiving device for a vehicle including: a communication unit communicating with another device via a wireless communication medium to transmit and receive information; an inter-vehicle communication unit communicating with surrounding vehicles via the wireless communication medium to transmit and receive information; an opening/closing control unit detecting an opened or closed state of an interior of a vehicle; and an incorrect delivery determination unit, when a scheduled delivery date and time is set, notifying a parcel reception time as a time zone of a predetermined length including the scheduled delivery date and time to surrounding vehicles not being at a delivery destination, determining whether or not incorrect delivery occurs based on the opened or closed state of the interior of the vehicle not being at the delivery destination during the parcel reception time, and notifying the incorrect delivery to a delivery person when it is determined that the incorrect delivery occurs.

### [Effect of the Invention]

As described above, according to this invention, even when there are a plurality of vehicles at the receiving location of the delivery item, the incorrect delivery can be prevented.

### [Brief description of figures]

[Fig. 1] Fig. 1 is a block diagram of a delivery receiving device for a vehicle according to an embodiment of this invention;
[Fig. 2] Fig. 2 is a schematic configuration diagram of a delivery receiving system using the delivery receiving device for the vehicle according to an embodiment of this invention;
[Fig. 3] Fig. 3 is a flowchart showing a procedure of an incorrect delivery determination process for a vehicle at a delivery destination of the delivery receiving device for the vehicle according to an embodiment of this invention;
[Fig. 4] Fig. 4 is a flowchart showing the procedure of the incorrect delivery determination process for the vehicle not being at the delivery destination of the delivery receiving device for the vehicle according to an embodiment of this invention;

### [Embodiment(s) of the Invention]

A delivery receiving device for a vehicle according to embodiments of this invention includes: a communication unit communicating with another device via a wireless communication medium to transmit and receive information; an inter-vehicle communication unit communicating with surrounding vehicles via the wireless communication medium to transmit and receive information; an opening/closing control unit detecting an opening or closing state of an interior of the vehicle; and an incorrect delivery determination unit notifying a parcel reception time as a time zone of a predetermined length including a scheduled delivery date and time, when the scheduled delivery date and time is set, to surrounding vehicles not being at a delivery destination, determining whether or not incorrect delivery occurs based on an opened or closed state of an interior of the vehicle not being at the delivery destination during the parcel reception time, and notifying, to a delivery person, that the incorrect delivery occurs, when it is determined that the incorrect delivery occurs.

Accordingly, the delivery receiving device for the vehicle according to the embodiment of this invention can prevent the incorrect delivery even when there are a plurality of vehicles at the receiving location of a delivery item.

### [Embodiments]

A delivery receiving device for a vehicle according to an embodiment of this invention will be described in detail below with reference to the figures.

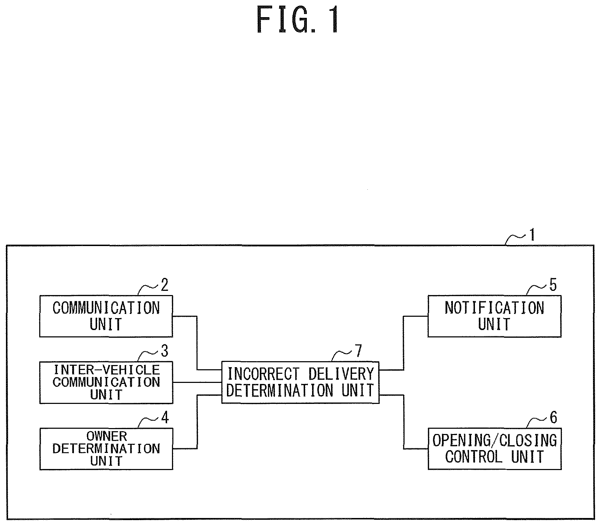

In Fig. 1, a vehicle 1 equipped with a delivery receiving device for a vehicle according to an embodiment of this invention includes a communication unit 2, an inter-vehicle communication unit 3, an owner determination unit 4, a notification unit 5, an opening/closing control unit 6, and an incorrect delivery determination unit 7.

The communication unit 2 communicates with other devices to transmit and receive information via a communication medium such as a wireless communication network. Even when the ignition of the vehicle 1 is in an off state, the communication unit 2 is energized to be in a communicable state.

The inter-vehicle communication unit 3 wirelessly communicates with other vehicles to transmit and receive information. Even when the ignition of the vehicle 1 is in an off state, the inter-vehicle communication unit 3 is energized to be in a communicable state.

The owner determination unit 4 determines whether or not an owner of the vehicle 1 is in the vicinity of the vehicle 1. The owner determination unit 4 determines whether or not the owner of the vehicle 1 is in the vicinity of the vehicle 1 based on, for example, whether or not a radio wave of a smart key of the vehicle 1 is detected.

When the radio wave of the smart key of the vehicle 1 is detected, the owner determination unit 4 determines that the owner of the vehicle 1 is in the vicinity of the vehicle 1. When the radio wave of the smart key of the vehicle 1 is not detected, the owner determination unit 4 determines that the owner of the vehicle 1 is not in the vicinity of the vehicle 1.

Even when the ignition of the vehicle 1 is in an off state, the owner determination unit 4 is energized, so that the owner determination unit 4 can determine whether or not the owner of the vehicle 1 is in the vicinity of the vehicle 1.

The notification unit 5 is configured with, for example, a monitor device, a speaker, a lamp, a meter, a buzzer, or the like and notifies various types of information through a sense of sight, a sense of hearing, or the like. Even when the ignition of the vehicle 1 is in an off state, the notification unit 5 is energized, so that the notification unit 5 can notify various information.

The opening/closing control unit 6 locks or unlocks the doors of the vehicle 1, the door of the trunk, or the like. In addition, the opening/closing control unit 6 detects opening or closing of an interior of the vehicle 1. Herein, the opening or closing of the interior of the vehicle 1 denotes opening or closing of the doors through which passengers get in or out of the vehicle 1, the door of the trunk, or the like. Even when the ignition of the vehicle 1 is in an off state, the opening/closing control unit 6 is allowed to be energized to be capable of locking or unlocking the doors of the vehicle 1 or the door of the trunk and to be capable of detecting whether or not the interior of the vehicle 1 is opened or closed.

The incorrect delivery determination unit 7 is configured with a computer unit having a CPU (Central Processing Unit), a RAM (Random Access Memory), a ROM (Read Only Memory), a flash memory, a hard disk device, an input port, and an output port.

The ROM of the incorrect delivery determination unit 7 stores a program for causing the computer unit to function as the incorrect delivery determination unit 7 together with various control constants, various maps, and the like. That is, the computer unit functions as the incorrect delivery determination unit 7 by the CPU executing the program stored in the ROM. Even when the ignition of the vehicle 1 is in an off state, the incorrect delivery determination unit 7 is energized to be capable of operating.

The incorrect delivery determination unit 7 transmits and receives information to and from other devices via the communication unit 2. The incorrect delivery determination unit 7 transmits and receives information to and from other vehicles via the inter-vehicle communication unit 3.

The incorrect delivery determination unit 7 and the owner determination unit 4 mutually transmit and receive signals such as control signals via an in-vehicle LAN (Local Area Network) conforming to a standard such as a CAN (Controller Area Network).

Various control targets including the above-described notification unit 5 and the above-described opening/closing control unit 6 are connected to the output port of the incorrect delivery determination unit 7.

In this embodiment, the incorrect delivery determination unit 7 detects the incorrect delivery based on a state of a vehicle not being at a nearby delivery destination acquired via the inter-vehicle communication unit 3.

When the scheduled delivery date and time is set, the incorrect delivery determination unit 7 notifies and shares the parcel reception time as a time zone of a predetermined length including the scheduled delivery date and time to surrounding vehicles not being at a delivery destination.

The incorrect delivery determination unit 7 sets, for example, a time zone between before and after a predetermined time from the set scheduled delivery date and time as the parcel reception time.

When the opened or closed state of the interior of the surrounding vehicles not being at the delivery destination is an opened state, during the parcel reception time, the incorrect delivery determination unit 7 determines that the incorrect delivery occurs.

The incorrect delivery determination unit 7 determines that the incorrect delivery occurs when the opened or closed state of the interior of the own vehicle is the opened state during the predetermined parcel reception time notified by the vehicle at the delivery destination and notifies the vehicle at the delivery destination that the opened or closed state of the interior of the own vehicle is the opened state.

While the owner determination unit 4 determines that the owner of the own vehicle is not in the vicinity of the own vehicle, the incorrect delivery determination unit 7 may determine that the incorrect delivery occurs when the opened or closed state of the interior of the own vehicle is the opened state and may be allowed to notify the vehicle at the delivery destination that the opened or closed state of the interior of the own vehicle is the opened state.

When the incorrect delivery determination unit 7 determines that the incorrect delivery occurs, the notification unit 5 notifies that the incorrect delivery occurs. The incorrect delivery determination unit 7 may allow the mobile terminal of the delivery person of the delivery company as the notification unit 5 to notify the incorrect delivery.

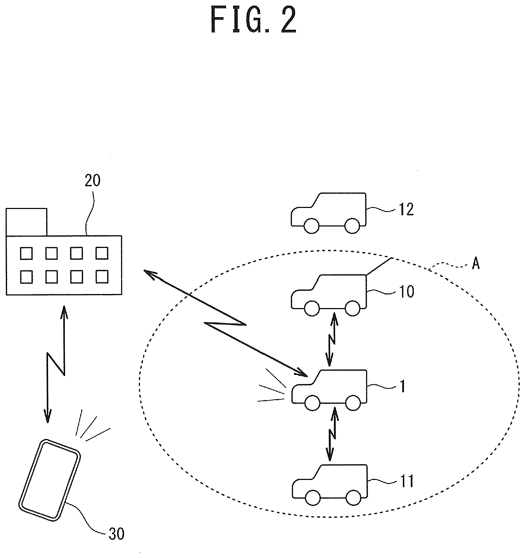

Fig. 2 is a diagram illustrating the configuration of the delivery receiving system using the delivery receiving device for the vehicle according to the present embodiment.

In Fig. 2, a vehicle 1, 10, 11, or 12 is equipped with the delivery receiving device for the vehicle according to the present embodiment. The vehicle 1 is a vehicle of a delivery destination, and the vehicles 10, 11, and 12 are vehicles not being at delivery destinations.

The delivery center 20 is provided with a server device of a delivery company to transmit a predetermined scheduled delivery date and time or the like to the vehicle 1 based on information registered in the server device.

The mobile terminal 30 is carried by the delivery person of the delivery company while performing delivery work, and the notification unit 5 is allowed to notify the incorrect delivery.

When the delivery center 20 notifies the scheduled delivery date and time, the incorrect delivery determination unit 7 of the vehicle 1 sets the parcel reception time.

When the start time of the parcel reception time arrives, the incorrect delivery determination unit 7 of the vehicle 1 allows the opening/closing control unit 6 to unlock the doors of the vehicle 1, the door of the trunk, or the like and notifies and shares the parcel reception time to the surrounding vehicles 10 and 11 via the inter-vehicle communication unit 3. A dotted frame indicated by A in Fig. 2 indicates a range in which communication is enabled by the inter-vehicle communication unit 3, and the vehicle 12 outside the communicable range is not notified of the parcel reception time.

The incorrect delivery determination unit 7 of the vehicle 1 monitors whether or not the opened or closed state of the interior of the own vehicle is the opened state during the parcel reception time.

When the incorrect delivery determination unit 7 of the vehicle 1 determines that the opened or closed state of the interior of the own vehicle is the opened state, the incorrect delivery determination unit 7 notifies the surrounding vehicles 10 and 11 that the delivery is completed through the inter-vehicle communication unit 3, and then, allows the opening/closing control unit 6 to lock the doors of the vehicle 1, the door of the trunk, or the like.

When it is notified by the incorrect delivery determination unit 7 of the vehicle 10 or the vehicle 11 that the interior of the vehicle 10 or the vehicle 11 is in the opened state, the incorrect delivery determination unit 7 of the vehicle 1 allows the notification unit 5 to notify that the incorrect delivery occurs and notify the delivery center 20 that the incorrect delivery occurs.

When the incorrect delivery determination unit 7 of the vehicle 10 or 11 is notified of the parcel reception time from the vehicle 1, the opening/closing control unit 6 monitors whether or not the opened or closed state of the interior of the own vehicle is the opened state during the parcel reception time.

When the incorrect delivery determination unit 7 of the vehicle 10 or the vehicle 11 determines that the opened or closed state of the interior of the own vehicle is the opened state, and the owner determination unit 4 determines that the owner of the vehicle 1 is not in the vicinity of the vehicle 1, it is determined that a person other than the owner of the own vehicle allows the interior to be in the opened state, the vehicle 1 is notified that the interior of the own vehicle is opened, the notification unit 5 is allowed to notify that the incorrect delivery occurs, and the delivery center 20 is notified that the incorrect delivery occurs.

When the delivery center 20 is notified that the incorrect delivery occurs, the delivery center 20 notifies the incorrect delivery to the mobile terminal 30 of the delivery person who is in charge of delivery.

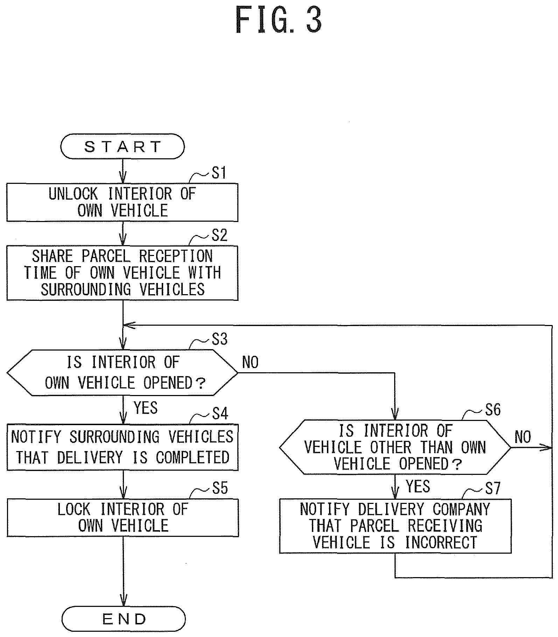

An incorrect delivery determination process for a vehicle at the delivery destination by the delivery receiving device for the vehicle according to the present embodiment having the above-described configuration will be described with reference to Fig. 3. It is noted that the incorrect delivery determination process for the vehicle at the delivery destination described below will be start at the start time of the parcel reception time.

In step S1, the incorrect delivery determination unit 7 allows the opening/closing control unit 6 to unlock the interior of the own vehicle. After executing the process of step S1, the incorrect delivery determination unit 7 executes the process of step S2.

In step S2, the incorrect delivery determination unit 7 shares the parcel reception time of the own vehicle with surrounding vehicles. After executing the process of step S2, the incorrect delivery determination unit 7 executes the process of step S3.

In step S3, the incorrect delivery determination unit 7 determines whether or not the interior of the own vehicle is opened.

When it is determined that the interior of the own vehicle is opened, the incorrect delivery determination unit 7 executes the process of step S4. When it is determined that the interior of the own vehicle is not opened, the incorrect delivery determination unit 7 executes the process of step S6.

In step S4, the incorrect delivery determination unit 7 notifies the surrounding vehicles that the delivery is completed. After executing the process of step S4, the incorrect delivery determination unit 7 executes the process of step S5.

In step S5, the incorrect delivery determination unit 7 allows the opening/closing control unit 6 to lock the interior of the own vehicle. After executing the process of step S5, the incorrect delivery determination unit 7 ends the incorrect delivery determination process for the vehicle at the delivery destination.

In step S6, the incorrect delivery determination unit 7 determines whether or not the interior of the vehicle other than the own vehicle is opened.

When it is determined that the interior of the vehicle other than the own vehicle is opened, the incorrect delivery determination unit 7 executes the process of step S7. When it is determined that the interior of the vehicle other than the own vehicle is not opened, the incorrect delivery determination unit 7 executes the process of step S3.

In step S7, the incorrect delivery determination unit 7 notifies the delivery company that the parcel receiving vehicle is incorrect. After executing the process of step S7, the incorrect delivery determination unit 7 ends the incorrect delivery determination process for the vehicle at the delivery destination.

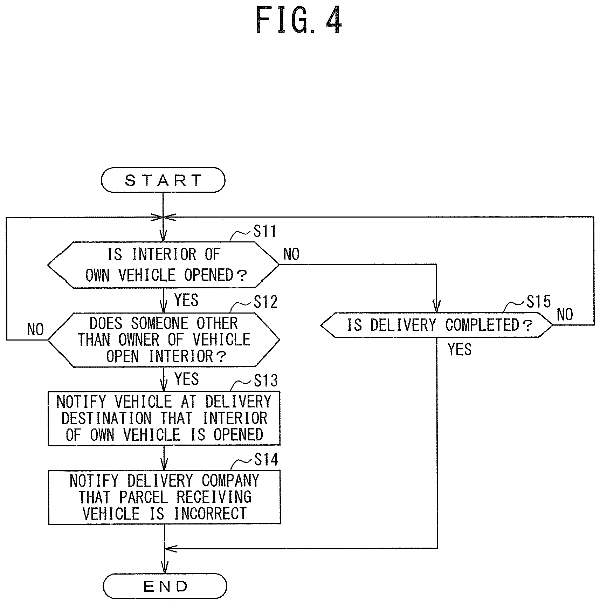

An incorrect delivery determination process for a vehicle not being at a delivery destination by the delivery receiving device for the vehicle according to the present embodiment will be described with reference to Fig. 4. It is noted that the incorrect delivery determination process for the vehicle not being at the delivery destination described below is started when the parcel reception time is notified by the surrounding vehicles and the start time of the parcel reception time arrives.

In step S 11, the incorrect delivery determination unit 7 determines whether or not the interior of the own vehicle is opened.

When it is determined that the interior of the own vehicle is opened, the incorrect delivery determination unit 7 executes the process of step S12. When it is determined that the interior of the own vehicle is not opened, the incorrect delivery determination unit 7 executes the process of step S15.

In step S12, the incorrect delivery determination unit 7 determines whether or not someone other than the owner of the vehicle opens the interior.

When it is determined that a person other than the owner of the vehicle opens the interior, the incorrect delivery determination unit 7 executes the process of step S13. When it is determined that a person other than the owner of the vehicle has not opened the interior, the incorrect delivery determination unit 7 executes the process of step S11.

In step S13, the incorrect delivery determination unit 7 notifies the vehicle at the delivery destination that the interior of the own vehicle is opened. After executing the process of step S13, the incorrect delivery determination unit 7 executes the process of step S14.

In step S14, the incorrect delivery determination unit 7 notifies the delivery company that the parcel receiving vehicle is incorrect. After executing the process of step S14, the incorrect delivery determination unit 7 ends the incorrect delivery determination process for the vehicle not being at the delivery destination.

In step S15, the incorrect delivery determination unit 7 determines whether or not the delivery by the vehicle at the delivery destination is completed.

When it is determined that the delivery by the vehicle at the delivery destination is completed, the incorrect delivery determination unit 7 ends the incorrect delivery determination process for the vehicle not being at the delivery destination. When it is determined that the delivery by the vehicle at the delivery destination is not completed, the incorrect delivery determination unit 7 executes the process of step S 11.

As described above, in this embodiment, the incorrect delivery determination unit 7 is provided in which, when the scheduled delivery date and time is set, the parcel reception time as a time zone of a predetermined length including the scheduled delivery date and time is notified to the surrounding vehicles not being at the delivery destination, the incorrect delivery is determined based on the opened or closed state of the interior of the surrounding vehicles during the parcel reception time, and when it is determined that the incorrect delivery occurs, the incorrect delivery is notified to the delivery person.

Accordingly, the delivery person can be allowed to recognize that the delivery item is to be put in the surrounding vehicles not being at the delivery destination, and the incorrect delivery can be prevented.

In addition, when the opened or closed state of the interior of the own vehicle is the opened state during the parcel reception time notified by the vehicle at the delivery destination, the incorrect delivery determination unit 7 notifies the vehicle at the delivery destination that the opened or closed state of the interior of the own vehicle is the opened state.

Accordingly, it can be notified that the interior of the own vehicle is opened during the parcel reception time of the vehicle at the delivery destination, and the incorrect delivery can be prevented.

In addition, when the incorrect delivery determination unit 7 determines that a person other than the owner of the own vehicle allows the interior to be in the opened state during the parcel reception time notified by the vehicle at the delivery destination, the incorrect delivery determination unit 7 notifies the vehicle at the delivery destination that the opened or closed state of the interior of the own vehicle is the opened state.

Accordingly, it can be notified that a person other than the owner of the own vehicle, that is, a delivery person opens the interior of the own vehicle, and the incorrect delivery can reliably be prevented.

In addition, the incorrect delivery determination unit 7 sets the predetermined time zone before and after the scheduled delivery date and time as the parcel reception time.

Accordingly, since the incorrect delivery is determined by the fact that the interior of the surrounding vehicles is opened during the time zone when the delivery person arrives, the incorrect delivery can reliably be prevented.

In addition, the incorrect delivery determination unit 7 allows the notification unit 5 of the own vehicle to notify the incorrect delivery to the delivery person.

Accordingly, the delivery person can be allowed to recognize the incorrect delivery, and the incorrect delivery can be prevented.

In addition, the incorrect delivery determination unit 7 notifies the incorrect delivery to the delivery person through the mobile terminal 30 of the delivery person.

Accordingly, the delivery person can be allowed to recognize the incorrect delivery, and the incorrect delivery can be prevented.

It is noted that, in this embodiment, the scheduled delivery date and time is set from the delivery center 20, but the scheduled delivery date and time may be set from the smartphone of the owner of the vehicle 1 or the like.

In addition, when the interior of the surrounding vehicles not being at the delivery destination is opened, the vehicle 1 is notified that the interior is opened, but when the interior is opened within a predetermined time after the interior is unlocked with the key, it may not be notified that the interior is opened.

Due to this, since it is predicted that the owner of the vehicle will be in the vicinity of the vehicle, there is a low possibility that the delivery item will incorrectly be put into the interior.

In addition, the notification of the parcel reception time and the notification that the interior is opened may be notified only for the same vehicle type. These notifications are effective when the vehicle at the delivery destination is discriminated by the vehicle type.

In addition, in the surrounding vehicles not being at the delivery destination, when the interior is opened or closed, it may be allowed to be notified that the interior of the vehicle is opened or closed.

In addition, in place of the fact that the interior is opened, the interior of the vehicle may be provided with a device such as a pressure sensor that recognizes that the delivery item is put into the interior, and it may be detected and notified by the device that the delivery item is put into the interior.

In addition, the values of the number plates between the vehicle 1 and the surrounding vehicles are acquired through the inter-vehicle communication unit 3, and only the vehicles with similar values of the number plates may be notified of the parcel reception time and may be notified that the interior is opened. These notifications are effective when the vehicle at the delivery destination is discriminated by the value of the number plate.

Further, when the parcel reception time arrives, the interior of the vehicle 1 is unlocked, but the interior may be allowed to be unlocked by a command or the like from the delivery center 20.

In this embodiment, the example in which the incorrect delivery determination unit 7 performs various determinations or calculations based on various sensor information has been described, but this invention is not limited thereto, various determinations or calculations may be performed by an external device of the vehicle based on detection information of various sensors transmitted from the communication unit 2, the determination results or the calculation results may be received by the communication unit, and various controls may be performed by using the received determination results or calculation results.

While embodiments of this invention have been described, it is apparent that some artisan could have made changes without departing from the scope of this invention. It is intended that any and all such modifications and equivalents are involved in the appended claims.

### (DESCRIPTION OF REFERENCE NUMERALS)

1 ... Vehicle, 2 ... Communication unit, 3 ... Inter-vehicle communication unit, 4 ... Owner determination unit, 5 ... Notification unit, 6 ... Opening/closing control unit, 7 ... Incorrect delivery determination unit, 20 ... Delivery center, 30 ... Mobile terminal

## Claims

1. A delivery receiving device for a vehicle comprising:
a communication unit (2) communicating with another device via a wireless communication medium to transmit and receive information;
an inter-vehicle communication unit (3) communicating with surrounding vehicles via the wireless communication medium to transmit and receive information;
an opening/closing control unit (6) detecting an opened or closed state of an interior of a vehicle; and
an incorrect delivery determination unit (7) notifying a parcel reception time as a time zone of a predetermined length including a scheduled delivery date and time, when the scheduled delivery date and time is set, to surrounding vehicles not being at a delivery destination, determining whether or not incorrect delivery occurs based on an opened or closed state of an interior of the vehicle not being at the delivery destination during the parcel reception time, and notifying to a delivery person, that the incorrect delivery occurs, when it is determined that the incorrect delivery occurs.

2. The delivery receiving device for the vehicle as claimed in claim 1, wherein the incorrect delivery determination unit (7) notifies the vehicle at the delivery destination that the opened or closed state of the interior of an own vehicle is an opened state when the opened or closed state of the interior of the own vehicle is the opened state during the parcel reception time notified by the vehicle at the delivery destination.

3. The delivery receiving device for the vehicle as claimed in claim 2, wherein, when the incorrect delivery determination unit (7) determines that a person other than the owner of the own vehicle allows the interior to be in the opened state during the parcel reception time notified by the vehicle at the delivery destination, the vehicle at the delivery destination is notified that the opened or closed state of the interior of the own vehicle is the opened state.

4. The delivery receiving device for the vehicle as claimed in any one of claims 1 to 3, wherein the incorrect delivery determination unit (7) sets a predetermined time zone before and after the scheduled delivery date and time as the parcel reception time.

5. The delivery receiving device for the vehicle as claimed in any one of claims 1 to 4, wherein the incorrect delivery determination unit (7) allows a notification unit of the own vehicle to notify the incorrect delivery to the delivery person.

6. The delivery receiving device for the vehicle as claimed in any one of claims 1 to 5, wherein the incorrect delivery determination unit (7) allows a mobile terminal of the delivery person to notify the incorrect delivery to the delivery person.

7. A delivery receiving system comprising:
a plurality of vehicles (1) equipped with the delivery receiving device for the vehicle as claimed in any one of claims 1 to 6; and
a delivery center (20) notifying the scheduled delivery date and time to the delivery receiving device for the vehicle.

8. An incorrect delivery determination method comprising:
notifying a parcel reception time as a time zone of a predetermined length including set scheduled delivery date and time in a vehicle at a delivery destination to surrounding vehicles not being at the delivery destination;
notifying, to the vehicle at the delivery destination, that the interior of the vehicle not being at the delivery destination is opened when a person other than an owner of the vehicle not being at the delivery destination allows the interior of the vehicle not being at the delivery destination to be in the opened state during the parcel reception time;
determining that the incorrect delivery occurs in the vehicle at the delivery destination when it is notified by the vehicle not being at the delivery destination that the interior is opened during the parcel reception time.

## Patentansprüche

1. Lieferungsempfangsvorrichtung für ein Fahrzeug, welche aufweist:
eine Kommunikationseinheit (2), die mit einer anderen Vorrichtung über ein drahtloses Kommunikationsmedium kommuniziert, um Information zu senden und zu empfangen;
eine Zwischenfahrzeug-Kommunikationseinheit (3), die mit Fahrzeugen in der Umgebung über das drahtlose Kommunikationsmedium kommuniziert, um Information zu senden und zu empfangen;
eine Öffnungs-/Schließsteuereinheit (6), die einen geöffneten oder geschlossenen Zustand eines Innenraums eines Fahrzeugs detektiert; und
eine inkorrekte-Lieferung-Bestimmungseinheit (7), die eine Paketempfangszeit als Zeitzone einer vorbestimmten Länge einschließlich eines/r geplanten Lieferdatums und Zeit, wenn das/die geplante Lieferdatum und Zeit gesetzt ist, zu Fahrzeugen in der Umgebung meldet, die sich nicht am Lieferziel befinden, bestimmt, ob eine inkorrekte Lieferung erfolgt, basierend auf einem geöffneten oder geschlossenen Zustand vom Innenraum des Fahrzeugs, das sich während der Paketempfangszeit nicht am Lieferziel befindet, und an eine Lieferperson meldet, dass die inkorrekte Lieferung erfolgt, wenn bestimmt wird, dass die inkorrekte Lieferung erfolgt.

2. Lieferungsempfangsvorrichtung für das Fahrzeug nach Anspruch 1, wobei die inkorrekte Lieferung-Bestimmungseinheit (7) dem Fahrzeug an dem Lieferziel meldet, dass der geöffnete oder geschlossene Zustand vom Innenraum eines eigenen Fahrzeugs im geöffneten Zustand ist, wenn der geöffnete oder geschlossene Zustand vom Innenraum des eigenen Fahrzeugs, während der Paketempfangszeit, die vom Fahrzeug am Lieferziel gemeldet wird, der geöffnete Zustand ist.

3. Die Lieferungsempfangsvorrichtung für das Fahrzeug nach Anspruch 2, wobei, wenn die inkorrekte Lieferung-Bestimmungseinheit (7) bestimmt, dass, während der Paketempfangszeit, die vom Fahrzeug an das Lieferziel gemeldet wird, eine andere Person als der Besitzer des eigenen Fahrzeugs erlaubt, dass der Innenraum im geöffneten Zustand ist, dem Fahrzeug am Lieferziel gemeldet wird, dass der geöffnete oder geschlossene Zustand vom Innenraum des eigenen Fahrzeugs der geöffnete Zustand ist.

4. Die Lieferungsempfangsvorrichtung für das Fahrzeug nach einem der Ansprüche 1 bis 3, wobei die inkorrekte Lieferung-Bestimmungseinheit (7) eine vorbestimmte Zeitzone vor und nach dem/der geplanten Lieferdatum und Zeit als die Paketempfangszeit setzt.

5. Die Lieferungsempfangsvorrichtung für das Fahrzeug nach einem der Ansprüche 1 bis 4, wobei die inkorrekte Lieferung-Bestimmungseinheit (7) erlaubt, dass die Meldeeinheit des eigenen Fahrzeugs inkorrekte Lieferung an die Lieferperson meldet.

6. Die Lieferungsempfangsvorrichtung für das Fahrzeug nach einem der Ansprüche 1 bis 5, wobei die inkorrekte Lieferungsbestimmungseinheit (7) erlaubt, dass ein mobiles Endgerät der Lieferperson die inkorrekte Lieferung an die Lieferperson meldet.

7. Lieferungsempfangssystem, welches aufweist:
eine Mehrzahl von Fahrzeugen (1), die mit der Lieferungsempfangsvorrichtung für das Fahrzeug nach einem der Ansprüche 1 bis 6 ausgestattet sind; und
ein Lieferungszentrum (20), das das/die geplante Lieferdatum und Zeit zu der Lieferungsempfangsvorrichtung für das Fahrzeug meldet.

8. Inkorrekte-Lieferung-Bestimmungsverfahren, welches aufweist:
Melden einer Paketempfangszeit als Zeitzone einer vorbestimmten Länge einschließlich eines/r gesetzten geplanten Lieferdatums und Zeit in einem Fahrzeug an einem Lieferziel zu einem Fahrzeug in der Umgebung, das sich nicht am Lieferziel befindet;
Melden, zu dem Fahrzeug am Lieferziel, dass der Innenraum des Fahrzeugs, das sich nicht am Lieferziel befindet, geöffnet ist, wenn eine andere Person als ein Besitzer des Fahrzeugs, das sich nicht am Lieferziel befindet, erlaubt, dass der Innenraum des Fahrzeugs, das sich nicht am Lieferziel befindet, während der Paketempfangszeit im geöffneten Zustand ist;
Bestimmen, dass die inkorrekte Lieferung in dem Fahrzeug am Lieferziel erfolgt, wenn von dem Fahrzeug, das sich nicht am Lieferziel befindet, gemeldet wird, dass der Innenraum während der Paketempfangszeit geöffnet ist.

## Revendications

1. Dispositif de réception de livraison pour un véhicule comprenant :
une unité de communication (2) communiquant avec un autre dispositif via un support de communication sans fil pour transmettre et recevoir des informations ;
une unité de communication inter-véhicules (3) communiquant avec des véhicules environnants via le support de communication sans fil pour transmettre et recevoir des informations ;
une unité de commande d'ouverture/fermeture (6) détectant un état ouvert ou fermé d'un intérieur d'un véhicule ; et
une unité de détermination de livraison incorrecte (7) notifiant un temps de réception de colis en tant qu'une plage de temps d'une longueur prédéterminée incluant une date et une heure de livraison planifiées, lorsque la date et l'heure de livraison planifiées sont réglées, à des véhicules environnants qui ne sont pas à une destination de livraison, déterminant si une livraison incorrecte est ou non survenue sur la base d'un état ouvert ou fermé d'un intérieur du véhicule qui n'est pas à la destination de livraison pendant le temps de réception de colis, et notifiant, à un livreur, que la livraison incorrecte est survenue, lorsqu'il est déterminé que la livraison incorrecte est survenue.

2. Dispositif de réception de livraison pour le véhicule selon la revendication 1, dans lequel l'unité de détermination de livraison incorrecte (7) notifie, au véhicule à la destination de livraison, que l'état ouvert ou fermé de l'intérieur d'un propre véhicule est un état ouvert lorsque l'état ouvert ou fermé de l'intérieur du propre véhicule est l'état ouvert pendant le temps de réception de colis notifié par le véhicule à la destination de livraison.

3. Dispositif de réception de livraison pour le véhicule selon la revendication 2, dans lequel, lorsque l'unité de détermination de livraison incorrecte (7) détermine qu'une personne autre que le propriétaire du propre véhicule permet à l'intérieur d'être dans l'état ouvert pendant le temps de réception de colis notifié par le véhicule à la destination de livraison, il est notifié, au véhicule à la destination de livraison, que l'état ouvert ou fermé de l'intérieur du propre véhicule est l'état ouvert.

4. Dispositif de réception de livraison pour le véhicule selon l'une quelconque des revendications 1 à 3, dans lequel l'unité de détermination de livraison incorrecte (7) règle une plage de temps prédéterminée avant et après la date et l'heure de livraison planifiées en tant que le temps de réception de colis.

5. Dispositif de réception de livraison pour le véhicule selon l'une quelconque des revendications 1 à 4, dans lequel l'unité de détermination de livraison incorrecte (7) permet à une unité de notification du propre véhicule de notifier la livraison incorrecte au livreur.

6. Dispositif de réception de livraison pour le véhicule selon l'une quelconque des revendications 1 à 5, dans lequel l'unité de détermination de livraison incorrecte (7) permet à un terminal mobile du livreur de notifier la livraison incorrecte au livreur.

7. Système de réception de livraison comprenant :
une pluralité de véhicules (1) pourvus du dispositif de réception de livraison pour le véhicule selon l'une quelconque des revendications 1 à 6 ; et
un centre de livraison (20) notifiant la date et l'heure de livraison planifiées au dispositif de réception de livraison pour le véhicule.

8. Procédé de détermination de livraison incorrecte comprenant :
la notification d'un temps de réception de colis en tant qu'une plage de temps d'une longueur prédéterminée incluant une date et une heure de livraison planifiées dans un véhicule à une destination de livraison à des véhicules environnants qui ne sont pas à la destination de livraison,
la notification, au véhicule à la destination de livraison, que l'intérieur du véhicule qui n'est pas à la destination de livraison est ouvert lorsqu'une personne autre qu'un propriétaire du véhicule qui n'est pas à la destination de livraison permet à l'intérieur du véhicule qui n'est pas à la destination de livraison d'être dans l'état ouvert pendant le temps de réception de colis ;
la détermination que la livraison incorrecte est survenue dans le véhicule à la destination de livraison lorsqu'il est notifié, par le véhicule qui n'est pas à la destination de livraison, que l'intérieur est ouvert pendant le temps de réception de colis.
